# EUROPEAN PATENT APPLICATION

(11) **EP 3 337 251 A1**
(43) Date of publication of application: **20.06.2018**
(21) Application number: 16290232.4
(22) Date of filing: 14.12.2016
(51) Int. Cl.: H04W 52/14, H04W 52/24

(54) **ADAPTING THE TRANSMISSION POWER OF A WIRELESS ACCESS POINT**

(71) Applicant: Alcatel Lucent, 91620 Nozay (FR)
(72) Inventor: Abou, Saleh Ahmad, 2018 Antwerpen (BE); Gacanin, Haris, 2018 Antwerpen (BE)
(74) Representative: IP HILLS NV

(57) **Abstract**

According to an embodiment, the disclosure relates to a platform (100) for adapting the transmission power of a wireless access point (200), AP, with connected Wi-Fi stations (213-215), STAs, in an environment with at least another AP (201) with other connected STAs (210-212), the platform (100) comprising a path loss module (101) configured to determine path losses (221-223) between the AP (200) and the connected STAs (213-215) and to select therefrom a lowest path loss as the connectivity path loss; and to determine path losses (220) between the AP (200) and the other connected STAs (210-212) and to select therefrom a highest path loss as the sensing path loss; and a power control module (102) configured to adapt the transmission power of the AP (200) such that it is greater than or equal to a maximum value of the connectivity path loss and the sensing path loss.

## Description

### Technical Field

The present disclosure generally relates to Wi-Fi networks in an environment comprising an access point, AP, with connected Wi-Fi stations, STAs, and at least another AP with other connected STAs. More particular, the present disclosure relates to the adapting of the transmission power of the AP in such an environment.

### Backaround

A dense deployment of APs in Wi-Fi networks leads to interference between neighbouring APs. Such an interference is one of the main problems in Wi-Fi networks since it affects user experiences due to a negative impact on end-user performances. Especially when the APs operate on the same or adjacent frequency channels the impact may be significant. Since there are only a finite number of available frequency channels and because in the 2.4 GHz frequency band only three non-overlapping channels, namely one, six and eleven, are available, it is in general unavoidable that overlapping channels are used by the APs in order to operate.

A way to mitigate interference in Wi-Fi networks is to choose a channel for an AP that is less occupied compared to other channels. However, this approach cannot avoid self-interference, namely interference originating from other APs operating on a same channel.

Self-interference may be mitigated by adapting an AP transmission power in the sense that the transmission power is decreased while a good performance is maintained. Such an AP transmission power control may be performed by focussing on received signal strength indicator, RSSI, levels and signal-to-noise ratios, SNRs as a metric for power allocation. Such a scheme is proposed by A. Akella, G. Judd, S. Seshan and P. Steenkiste in "Self-management in Chaotic Wireless Deployment" published in the Proc. of ACM Mobicom, Cologna, Germany, August 2005. Other metrics may also be used, such as a retransmission rate which may correspond to a rate to adapt the transmission power as published in "Dynamic Data Rate and Transmit Power Adjustment in IEEE 802.11 Wireless LANs" by P. Chevillat, J. Jelitto and H.L. Truong in the International Journal of Wireless Information Networks, Vol. 12, No. 3, July 2005. The power control may also be based on estimating a link quality between an AP and STAs such as published in "Interference Analysis and Transmit Power Control in IEEE 802. 11a/h Wireless LANs", by D. Qiao, S. Choi and K.G. Shin in IEEE Transactions on Networking, Vol. 15, No. 5, October 2007. This approach requires the use of control frames between the AP and STAs.

Decreasing the transmission power of an AP may lead to less interference caused by neighbouring APs, lower contention problems on neighbouring APs and corresponding wireless networks, WLANs, and frequency band reuse as well.

### Summary

Decreasing the transmission power of an AP, however, decreases the coverage area of the AP which may affect performances of connected STAs to the AP. Moreover, as a consequence a connection between a STA and the AP may even be lost.

Another drawback of decreasing the transmission power of an AP in an environment comprising at least another AP is that a hidden node problem may be created. If the transmission power of an AP is decreased in such a way that its coverage is out of range another AP, a STA may be in the coverage of both the APs, while the APs are out of range.

A third drawback is that a coverage hole in the environment may be created by decreasing the transmission power. A coverage hole comprises an area in the environment without any coverage of an AP.

It is therefore an objective of the present disclosure to alleviate these drawbacks and to provide a solution that mitigates interference caused by another AP operating at a same or adjacent channel while at the same time a coverage of the AP is guaranteed such that performances of connected STAs is not affected and no hidden node situation is created.

This objective is achieved, according to a first aspect, by a platform for adapting the transmission power of a wireless access point, AP, with connected Wi-Fi stations, STAs, in an environment with at least another AP with other connected STAs, the platform comprising:
- a path loss module configured to determine:
   ∘ path losses between the AP and the connected STAs and to select therefrom a lowest path loss as the connectivity path loss; and
   ∘ path losses between the AP and the other connected STAs and to select therefrom a highest path loss as the sensing path loss;
- a power control module configured to adapt the transmission power of the AP such that it is greater than or equal to a maximum value of the connectivity path loss and the sensing path loss.

The platform determines path losses between the AP and connected STAs, and also between the AP and STAs that are connected to another AP. From the former path losses a lowest value is selected and identified as the connectivity path loss. The latter path losses, namely those from STAs connected to another AP, a highest value is selected and identified as the sensing path loss. Next, the power control module adapts the transmission power of the AP within a range. This range is bounded by a maximum transmission power of the AP as an upper limit, and the lower limit comprises the maximum value of the connectivity path loss and the sensing path loss.

The connectivity path loss identifies a STA connected to the AP that is located the most distant from the AP from a signal strength point of view. The sensing path loss identifies a STA connected to another AP which is located the most closely to the AP, from a signal strength point of view.

By identifying these two distinguished STAs through the determination of path losses and subsequently setting as a minimum level for the transmission power of the AP the maximum value of the connectivity path loss and the sensing path loss, the power control module guarantees that on the one hand all connected STAs will stay connected, while on the other hand the coverage of the AP will intersect with a coverage of another AP. Hence, through the latter the creation of a coverage hole is prevented and, thus, the hidden node problem is avoided.

It is an advantage through the combination of path losses between STAs connected to the AP and STAs connected to another AP in the environment, the platform adapts the Wi-Fi networks associated with one of the APs in such a way that a coverage is provided for each of the STAs in the environment while at the same time self-interference is mitigated.

According to an embodiment, the connectivity path loss is increased by a predefined connectivity threshold; and the sensing path loss is increased by a predefined sensing threshold.

By this increase, the minimum level for the transmission power of the AP is increased as well. As a result, a STA will stay connected even if it moves further away from the AP. Moreover, depending which of the two path losses is the greatest, the overlap between coverages of AP is increased as well thereby further assuring coverage near the boundaries of the network.

If the connectivity path loss is greater than the sensing path loss, an increase by a connectivity threshold ensures a certain data rate for the STA located the most distant from the AP from a signal strength point of view. If the sensing path loss is the maximum value, an increase by a sensing threshold guarantees that roaming between APs may be performed in an efficient way.

Preferable, the connectivity threshold is greater than the sensing threshold. This ensures that a data rate for a connected STA is guaranteed while at the same time the overlap between coverages of APs is small such that self-interference is limited to a minimum.

According to an embodiment, the power control module is further configured to decrease the transmission power of the AP when a retransmission ratio of the AP is less than a first retransmission threshold.

In other words, the power control module is triggered to decrease the transmission power of the AP when its retransmission ratio is less than a first retransmission threshold.

When the retransmission ratio of an AP is low it indicates that the AP is operating in an efficient way. Therefore, it is possible to decrease its transmission power while STAs stay connected in an adequate way and at the same time self-interference is mitigated.

According to an embodiment, the power control module is further configured to decrease the transmission power of the AP when the retransmission ratio of the AP is equal to or greater than the first retransmission threshold, and the retransmission ratio is less than a second retransmission threshold, and a channel utilization of the AP is greater than a channel utilization threshold.

If the retransmission ratio is not less than the first retransmission threshold, the power control module may also be triggered to decrease the transmission power when the retransmission ratio is less than a second retransmission threshold and at the same time a channel utilization of the AP is greater than a channel utilization threshold.

Channel utilization is a metric for contention since it represents the rate of utilization of a channel used by an AP in order to operate. Therefore, if the channel utilization exceeds a threshold but at the same time the retransmission threshold doesn't exceeds a second retransmission threshold, the transmission power can again be decreased without affecting user experiences on the AP.

According to an embodiment, the power control module is further configured to increase the transmission power of the AP when:
- the retransmission ratio of the AP is equal to or greater than the first retransmission threshold, and
- the channel utilization is smaller than the channel utilization threshold or the retransmission ratio is equal to or greater than the second retransmission threshold, and
- the channel utilization is smaller than the channel utilization threshold, and
- the retransmission ratio is greater than a third retransmission threshold or a signal-to-noise level of the STAs of the AP is lower than a signal-to-noise level threshold.

The power control module may also be triggered to increase the transmission power of the AP. The power control module will first determine if the retransmission ratio is equal or greater than the first retransmission threshold, and if the channel utilization is smaller than the channel utilization threshold or the retransmission ratio is equal or greater than the second retransmission threshold. If this is the case, the transmission power is increased when the retransmission ratio is greater than a third retransmission ratio or a signal-to-noise level of the STAs of the AP is lower than a signal-to-noise level threshold.

A noise level, used to calculate a signal-to-noise ratio, is a measurement of non-IEEE 802.11 noise power determined by sampling a channel when virtual sense indicates idle and the AP is neither transmitting nor receiving frames. Hence, it may be considered as a metric representing noise as well as interference.

By increasing the transmission power of the AP interference caused by other APs is mitigated and throughput to STAs connected to the AP is increased.

According to an embodiment, the power control module is further configured to increase the transmission power of the AP when:
- the retransmission ratio of the AP is equal to or greater than the first retransmission threshold, and
- the channel utilization is smaller than the channel utilization threshold or the retransmission ratio is equal to or greater than the second retransmission threshold, and
- the channel utilization is smaller than the channel utilization threshold, and
- a failed packet ratio of the AP (200) is greater than a failed packet threshold.

When the power control module determines if the retransmission ratio is equal or greater than the first retransmission threshold, and if the channel utilization is smaller than the channel utilization threshold or the retransmission ratio is equal or greater than the second retransmission threshold, it also increases the transmission power if a failed packet ratio of the AP is greater than a failed packet threshold.

By increasing the transmission power the failed packet ratio of the AP will be decreased.

According to an embodiment, the power control module is further configured to set the transmission power of the AP to a maximum transmission power when a retransmission ratio of the AP is greater than a critical retransmission threshold.

Instead of incrementally increasing the transmission power of the AP, it may also immediately be set at its maximum value. This will be the case if the retransmission ratio is very high such that it becomes critical for the operation of the AP and/or connected STAs. Hence, the retransmission ratio will be decreased directly to an acceptable level.

According to an embodiment, the power control module is further configured to set the transmission power of the AP to a maximum transmission power when a failed packet ratio of the AP is greater than a critical failed packet threshold.

A same procedure is carry out by the power control module if a failed packet ratio of the AP exceeds a critical threshold. By directly adjusting the transmission power to its maximum value, the failed packet ratio will directly decrease to an acceptable level.

According to a second aspect, the disclosure relates to a method for adapting the transmission power of a wireless access point, AP, with connected Wi-Fi stations, STAs, in an environment with at least another AP with other connected STAs, the method comprising:
- determining path losses between the AP and the connected STAs, and
- selecting therefrom a lowest path loss as the connectivity path loss, and
- determining path losses between the AP and the other connected STAs, and
- selecting therefrom a highest path loss as the sensing path loss;
- adapting the transmission power of the AP such that it is greater than or equal to a maximum value of the connectivity path loss and the sensing path loss.

According to a third aspect, the disclosure relates to a computer program product comprising a computer-executable instructions for performing the method according to the second aspect when the program is run on a computer.

According to a fourth aspect, the disclosure relates to a computer readable storage medium comprising the computer program product according to third aspect.

According to a fifth aspect, the disclosure relates to a data processing system programmed for carrying out the method according to the second aspect.

### Brief Description of the Drawings

Fig. 1 illustrates a platform for adapting the transmission power of a wireless access point according to an embodiment of the disclosure;
Fig. 2 illustrates an environment comprising an access point with connected Wi-Fi stations and another access point with other connected Wi-Fi stations according to an embodiment of the disclosure;
Fig. 3 illustrates coverages of access points according to an embodiment of the disclosure;
Fig. 4 illustrates steps performed for decreasing or increasing the transmission power of an AP according to an embodiment of the disclosure;
Fig. 5 illustrates a suitable computing system for performing steps according to embodiments of the disclosure.

### Detailed Description of Embodiment(s)

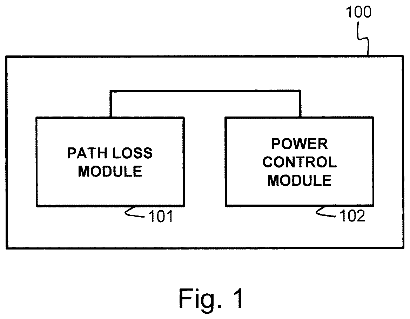

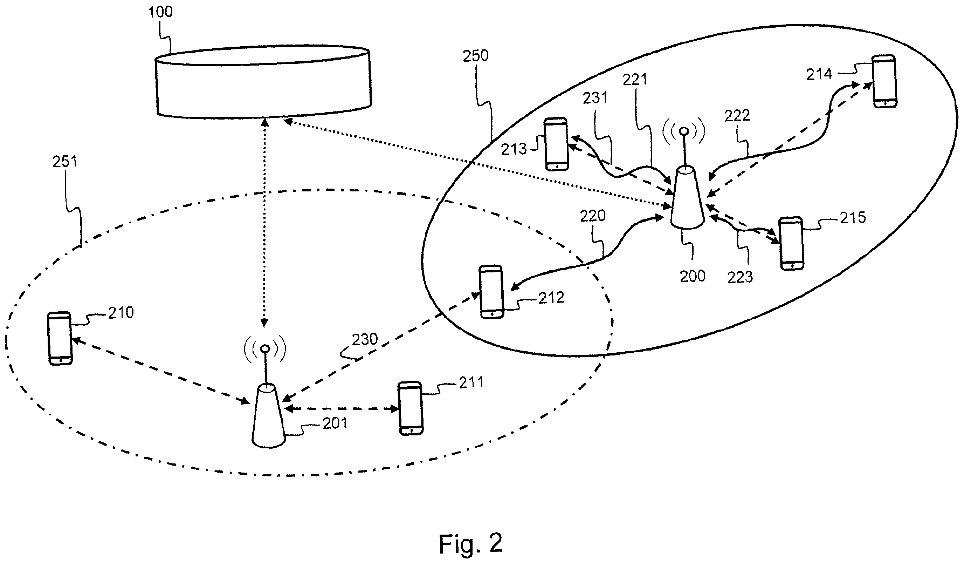

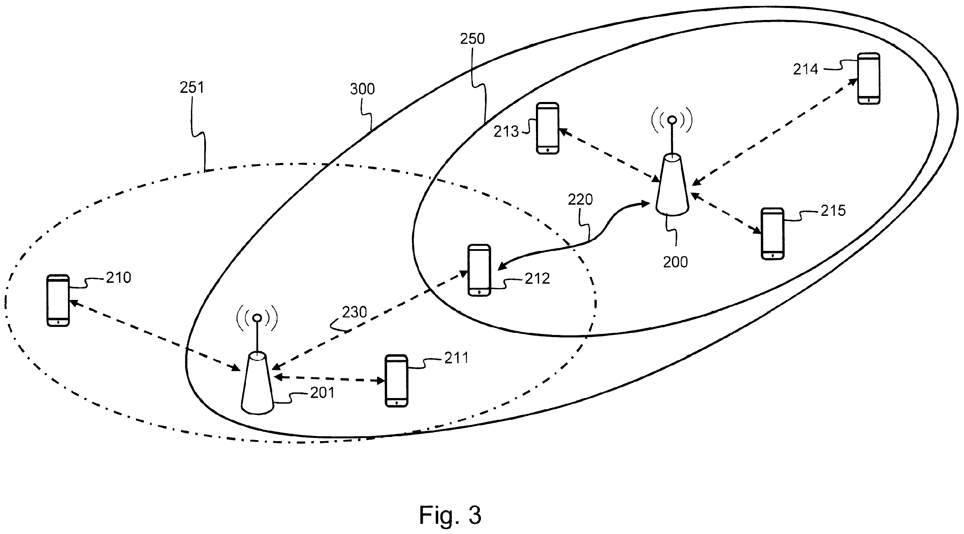

Fig. 1 illustrates a platform 100 for adapting the transmission power of a wireless access point (AP) in an environment with at least another AP. Fig. 2 illustrates such an environment. The AP 200 in the environment is connected 231 with Wi-Fi station, STA, 213 and also with other STAs 214 and 215. Another AP 201 in the environment is connected 230 with STA 212 and also with STAs 210 and 211. Each AP 200, 201 has a coverage, such as coverage 250 for AP 200 and coverage 251 for AP 201. By adapting the transmission power of, for example, AP 200 the coverage may be adapted as well. Fig. 3 illustrates such an adaptation, wherein coverage 250 is increased to coverage 300 by increasing the transmission power of AP 200.

The platform 100 comprises a path loss module 101 and this module 101 is configured to determine path losses between STAs such as 213, 214 and 215 connected to the AP 200 and STAs such as 210, 211 and 212 connected to the other AP 201. Path losses between the connected STAs 213, 214 and 215 are illustrated as 221, 222 and 223 respectively. Within these path losses 221, 222 and 223 a lowest path loss is selected by the path loss module 201 and identified as the connectivity path loss. Since STA 212 is within the coverage 250 of the AP 200, there is also a path loss 220 between STA 212 and AP 200 while STA 212 is connected 230 with AP 201. Within path losses between the AP 200 and STAs connected to another AP, such as 201, a highest value is selected and identified as the sensing path loss. Next, a maximum value of the connectivity and sensing path losses is used as a minimum level of the transmission power of the AP.

The platform 100 further comprises a power control module 104. This module 104 is configured to adapt the transmission power of the AP 200, wherein the transmission power is adapted within a range of a maximum level equal to the maximum transmission power of the AP 200 and as a minimum level the maximum value of the connectivity and sensing path losses. If, for example, the transmission power of AP 200 is initially set such that is corresponds to coverage 300, it may be decreased to a power transmission such that the AP 200 covers area 250. This power transmission corresponds to the sensing path loss, which corresponds to path loss 220.

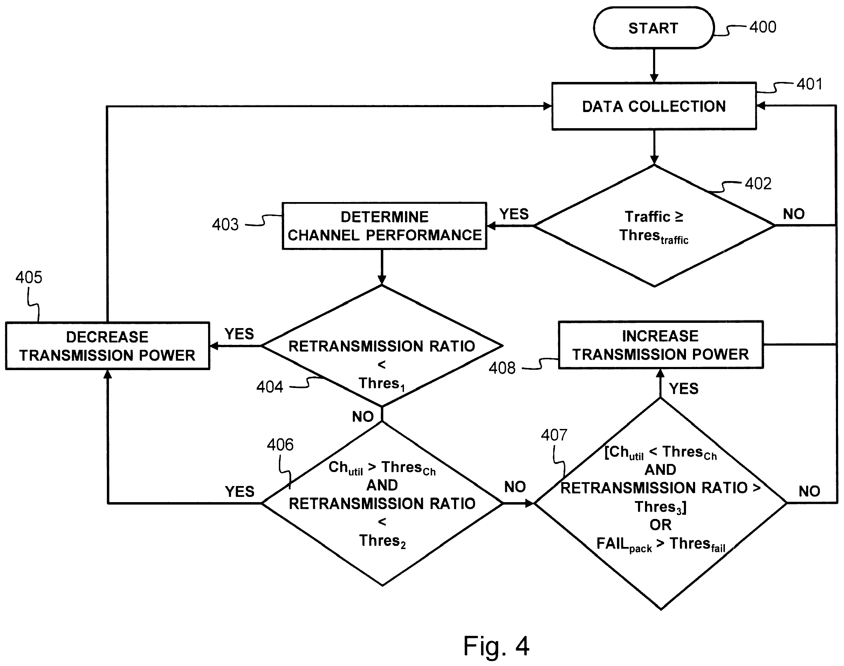

The steps performed to increase or decrease the transmission power of AP 200 are illustrated in Fig.4. At the start 400, data is collected 401 by the platform. The collected 401 data comprises a retransmission counter, a failed packet counter, total packets sent by the AP 200 and a signal-to-noise ratio. The data may be retrieved respectively by the following parameters from a STA table of the AP or on a radio/SSID level directly:
- *Device. WiFi.SSID. {i}*. *Stats. RetransCount,*
- *Device. WiFi.SSID. {i}. Stats. FailedRetransCount,*
- *Device. WiFi. SSID. {i}*. *Stats. Packets Sent,*
- *Device. WiFi.Radio. {i}*. *Stats.noise.*
A channel utilization is also retrieved and is a percentage of time the AP 200 sensed the channel busy as indicated by either a physical or virtual sense mechanism.

A noise level, used to calculate a signal-to-noise ratio, is a measurement of non-IEEE 802.11 noise power made by sampling the channel when virtual carrier sense indicates idle and the AP 200 is neither transmitting nor receiving a frame.

When a sufficient amount of data is retrieved, which corresponds to an amount of traffic transmitted, channel performances may be determined 403. The amount of traffic may be calculated as a number of data, wherein, for example, a traffic threshold corresponds to 10MB. If this threshold is exceeds 402, the channel performances are determined 403.

A first channel performance parameter is a retransmission ratio which is calculated by a percentage of the retransmission counter over the total packets sent. A second channel performance parameter is a failed packet ratio which is calculated as a percentage of the failed packet counter over the difference between the total packets sent and the retransmission counter. A third channel performance parameter is the channel utilization. The channel utilization is the percentage of time the AP sensed the medium busy, as indicated by either the physical or virtual carrier sense mechanism.

Next, the power control module 102 decreases 405 the transmission power of the AP 200 if the retransmission ratio is less than a first retransmission threshold 404. This first retransmission threshold may, for example, be 13% or a range around it. If the retransmission ratio is not less than the first retransmission threshold 404, a second test 406 is performed.

In this second test 406, the channel utilization is compared with a threshold, the channel utilization threshold, which may be, for example, 40% or a range around it. Again, the retransmission ratio is taken into account and now compared with a second retransmission threshold, which may, for example, be 22% or a range around it. If the channel utilization is greater than the channel utilization threshold and the retransmission ratio is less than the second retransmission threshold, the transmission power is decreased 405.

If the two previous tests 404, 406 are negative, a third test is performed 407. This third test 407 comprises two subtests, which are independent from each other.

If the channel utilization is less than the channel utilization factor and the retransmission ratio is greater than a third retransmission threshold or the signal-to-noise ratio is too low, the transmission power is increased 408. The third retransmission threshold may, for example, be 35% or a range around it.

A second subset monitors the failed packet ratio. If the failed packet ratio exceed a failed packet threshold, the transmission power is also increased 408. This failed packet threshold may, for example, be 1%.

The decrease 405 or increase 408 of the transmission power may be performed incrementally.

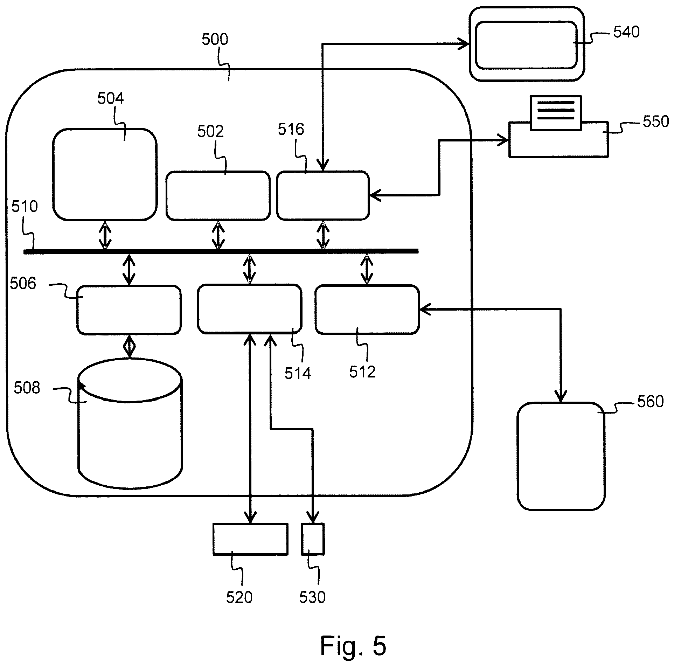

Fig. 5 shows a suitable computing system 500 for performing the steps according to the above embodiments. Computing system 500 may be used as a platform 100 for adapting the transmission power of an AP 200. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems 560. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A platform (100) for adapting the transmission power of a wireless access point (200), AP, with connected Wi-Fi stations (213, 214, 215), STAs, in an environment with at least another AP (201) with other connected STAs (210, 211, 212), the platform (100) comprising:
- a path loss module (101) configured to determine:
o path losses (221, 222, 223) between the AP (200) and the connected STAs (213, 214, 215) and to select therefrom a lowest path loss as the connectivity path loss; and
o path losses (220) between the AP (200) and the other connected STAs (210,211,212) and to select therefrom a highest path loss as the sensing path loss;
- a power control module (102) configured to adapt the transmission power of the AP (200) such that it is greater than or equal to a maximum value of the connectivity path loss and the sensing path loss.

2. The platform (100) according to claim 1, wherein the connectivity path loss is increased by a predefined connectivity threshold; and wherein the sensing path loss is increased by a predefined sensing threshold.

3. The platform (100) according to claim 1, wherein the power control module (102) is further configured to decrease (405) the transmission power of the AP (200) when a retransmission ratio of the AP (200) is less than a first retransmission threshold.

4. The platform (100) according to claim 3, wherein the power control module (102) is further configured to decrease (405) the transmission power of the AP (200) when the retransmission ratio of the AP (200) is equal to or greater than the first retransmission threshold, and the retransmission ratio is less than a second retransmission threshold, and a channel utilization of the AP (200) is greater than a channel utilization threshold.

5. The platform (100) according to claim 4, wherein the power control module (102) is further configured to increase (408) the transmission power of the AP (200) when:
- the retransmission ratio of the AP (200) is equal to or greater than the first retransmission threshold, and
- the channel utilization is smaller than the channel utilization threshold or the retransmission ratio is equal to or greater than the second retransmission threshold, and
- the channel utilization is smaller than the channel utilization threshold, and
- the retransmission ratio is greater than a third retransmission threshold or a signal-to-noise ratio of the STAs of the AP (200) is lower than a signal-to-noise ratio threshold.

6. The platform (100) according to claim 4, wherein the power control module (102) is further configured to increase (408) the transmission power of the AP (200) when:
- the retransmission ratio of the AP (200) is equal to or greater than the first retransmission threshold, and
- the channel utilization is smaller than the channel utilization threshold or the retransmission ratio is equal to or greater than the second retransmission threshold, and
- the channel utilization is smaller than the channel utilization threshold, and
- a failed packet ratio of the AP (200) is greater than a failed packet threshold.

7. The platform (100) according to claim 1, wherein the power control module (102) is further configured to set the transmission power of the AP (200) to a maximum transmission powerwhen a retransmission ratio of the AP (200) is greater than a critical retransmission threshold.

8. The platform (100) according to claim 1, wherein the power control module (102) is further configured to set the transmission power of the AP (200) to a maximum transmission power when a failed packet ratio of the AP (200) is greater than a critical failed packet threshold.

9. A method for adapting the transmission power of a wireless access point (200), AP, with connected Wi-Fi stations (213, 214, 215), STAs, in an environment with at least another AP (201) with other connected STAs (210, 211, 212), the method comprising:
- determining path losses (221, 222, 223) between the AP (200) and the connected STAs (213, 214, 215), and
- selecting therefrom a lowest path loss as the connectivity path loss, and
- determining path losses (220) between the AP (200) and the other connected STAs (210, 211, 212), and
- selecting therefrom a highest path loss as the sensing path loss;
- adapting the transmission power of the AP (200) such that it is greater than or equal to a maximum value of the connectivity path loss and the sensing path loss.

10. A computer program product comprising a computer-executable instructions for performing the method according to claim 9 when the program is run on a computer.

11. A computer readable storage medium comprising the computer program product according to claim 10.

12. A data processing system programmed for carrying out the method according to claim 9.
